# EUROPÄISCHE PATENTSCHRIFT

(11) **EP 0 484 570 B1**
(45) Veröffentlichungstag und Bekanntmachung des Hinweises auf die Patenterteilung: **23.02.1994**
(21) Anmeldenummer: 90121203.5
(22) Anmeldetag: 06.11.1990
(51) Int. Cl.: H02H 7/122, H02M 3/335

(54) **Sperrwandler-Schaltnetzteil**
Flyback switching power supply
Alimentation à découpage de type à récupération

(43) Veröffentlichungstag der Anmeldung: 13.05.1992
(73) Patentinhaber: SIEMENS AKTIENGESELLSCHAFT, 80333 München (DE)
(72) Erfinder: Paulik, Ernst, W-8891 Hilgertshausen (DE)

(56) Entgegenhaltungen:
- "Funktion und Anwendung des Sperrwandler-IC TDA 4605" 1989, Siemens AG, Bereich Halbleiter, München

## Beschreibung

Die Erfindung betrifft ein Sperrwandler-Schaltnetzteil nach dem Oberbegriff des Anspruchs 1.

Ein solches freischwingendes Sperrwandler-Schaltnetzteil ist beispielsweise aus der Siemens-Produktinformation "Funktion und Anwendung der Sperrwandler-IC TDA 4605", Bestellnummer B111-B6090 bekannt. Auf Seite 14, Bild 25 wird eine Anwendungsschaltung zur Dimensionierung des Schaltnetzteiles vorgestellt.

Durch den Gleichrichter (Dioden V1 bis V4) wird die Netzeingangsspannung gleichgerichtet. Der Ladekondensator C1 glättet die Spannung, so daß am oberen Anschluß der Primärwicklung (nₚ) des Transformators T1 eine Gleichspannung U zur Verfügung steht. Als Halbleiterschaltelement V11 wird beispielsweise ein SIPMOS®-Transistor BUZ 90 eingesetzt. Die RCD-Beschaltung, auch Snubber-Netzwerk genannt, mit dem Einweggleichrichter, hier der Diode V5, dem Widerstand R6 und dem Kondensator C5 begrenzt die Spitzenspannung von Überschwingern beim Abschalten des Halbleiterschaltelementes V11. Die Wahl des Kapazitätswertes für den Kondensator C5 ist weitgehend unkritisch, kann jedoch Einfluß auf das dynamische Regelverhalten haben. Richtwert ist ein Bereich von etwa 22 nF bis 100 nF. Mit dem Widerstand R6 wird die Höhe der Überschwinger beim Abschalten des Halbleiterschaltelementes V11 eingestellt.

Der Widerstand R6 dieser RCD-Beschaltung wird beim Betrieb des Sperrwandler-Schaltnetzteils mit einer Verlustleistung im Wattbereich belastet. Damit erwärmt sich dieser Widerstand relativ stark. Wird dieser Widerstand R6 zu warm, so besteht die Möglichkeit - wie prinzipiell in Bild 27 der genannten Siemens-Produktinformation gezeigt - den Widerstand durch mehrere in Reihe geschaltete Widerstände zu ersetzen. Die Verlustleistung in den einzelnen Widerständen wird dann kleiner.

Beim Betrieb eines derartigen Sperrwandler-Schaltnetzteiles hat sich herausgestellt, daß infolge der Erwärmung des Widerstandes R6 eine der beiden Lötstellen dieses Widerstandes aufgehen kann. Das Halbleiterschaltelement wird dann beim Abschalten über dessen integrierte Inversdiode betrieben. Uber diese Diode fließt der Abschaltstrom. Das Halbleiterschaltelement erhitzt sich und dessen R_{DSon}-Wert steigt an. Dies kann soweit führen, daß das Halbleiterschaltelement zerstört wird.

Der Erfindung liegt die Aufgabe zugrunde, das eingangsgenannte Sperrwandler-Schaltnetzteil so weiter zu entwickeln, daß bei einem Ausfall des Widerstandes in der RCD-Beschaltung das Halbleiterschaltelement wirksam vor Zerstörung geschützt wird.

Diese Aufgabe wird durch die kennzeichnenden Merkmale des Anspruchs 1 gelöst.

Weiterbildungen der Erfindung sind Gegenstand der Unteransprüche.

Die Erfindung wird im folgenden im Zusammenhang mit fünf Figuren näher erläutert. Es zeigen:
- FIG 1: ein erstes Ausführungsbeispiel eines Sperrwandler-Schaltnetzteils nach der Erfindung,
- FIG 2: den Verlauf der Drainspannung am Halbleiterschaltelement bei wirksamer RCD-Beschaltung,
- FIG 3: den Verlauf der Drainspannung bei Ausfall des Widerstandes R6 in der RCD-Beschaltung,
- FIG 4: den Verlauf der Drainspannung beim erfindungsgemäßen Sperrwandler-Schaltnetzteil, und
- FIG 5: ausschnittsweise ein zweites Ausführungsbeispiel eines Sperrwandler-Schaltnetzteils nach der Erfindung.

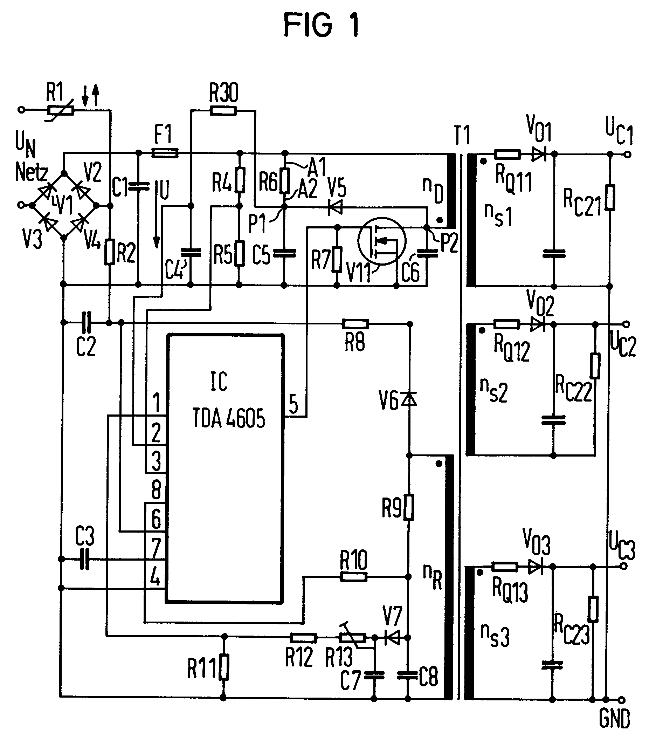

FIG 1 zeigt ein freischwingendes Sperrwandler-Schaltnetzteil, wie es die Erfindung vorschlägt. Bis auf die im folgenden noch näher zu erläuternden und für die Erfindung wesentlichen Schaltungsunterschiede entspricht die Schaltung in FIG 1 der Schaltung von Bild 25 in der bereits eingangs erwähnten Siemens-Produktinformation, auf die hiermit zum Zwecke der Offenbarung ausdrücklich Bezug genommen wird. Im folgenden werden der besseren Übersichtlichkeit wegen auch die dort bereits verwendeten Bezugszeichen weiter verwendet.

Als Halbleiterschaltelement V11 dient ein SIPMOS® (z. B. der BUZ 90 von Siemens), der eine von einem Brückengleichrichter V1, V2, V3, V4 gleichgerichtete Spannung U an eine erste Wicklung nₚ eines Transformators T periodenweise schaltet. Zur Ansteuerung des SIPMOS® V11 ist eine Steuereinrichtung IC vorgesehen, hier beispielhaft der integrierte Schaltkreis TDA 4605 von Siemens. Das Halbleiterschaltelement V11 wird von der Steuereinrichtung IC nach Maßgabe mindestens eines an eine erste Eingangsklemme 2 der Steuereinrichtung IC anzulegenden Primärstromnachbildungssignales sowie vorzugsweise eines die Steuereinrichtung IC freigebenden und an eine zweite Eingangsklemme 3 dieser Steuereinrichtung IC anzulegenden Spannungssignales pulsweitenmoduliert ein- und ausgeschaltet.

Um beim Ausschalten des Halbleiterschaltelementes V11 die Spitzenspannungen von Überschwingern begrenzen zu können, weist das Sperrwandler-Schaltnetzteil eine RCD-Beschaltung auf. Diese RCD-Beschaltung sieht einen Widerstand R6, eine Kapazität C5 sowie einen Einweggleichrichter V5 vor. Der Widerstand R6 liegt mit seiner einen Klemme am positiven Pol der gleichgerichteten Spannung U und mit seiner anderen Klemme am Kathodenanschluß einer den Einweggleichrichter V5 bildenden Diode sowie an einem Anschluß des Kondensators C5. Der andere Anschluß des Kondensators C5 liegt auf Bezugspotential. Der Anodenanschluß der Diode V5 ist mit dem Verbindungspunkt P2 der Primärwicklung nₚ des Transformators T1 und dem Halbleiterschaltelement V11 verbunden. In diesem Ausführungsbeispiel ist der Anodenanschluß der Diode V5 an den Drainanschluß des SIPMOS® angeschlossen. Der Verbindungspunkt zwischen dem Widerstand R6, der Diode V5 und dem Kondensator C5 der RCD-Beschaltung ist mit P1 bezeichnet. Die Wahl des Kapazitätswertes des Kondensators C5 ist weitgehend unkritisch, kann jedoch Einfluß auf das dynamische Regelverhalten der Steuereinrichtung IC haben. Richtwert ist ein Bereich von etwa 22 nF bis 100 nF. Mit dem Widerstand R6 wird die Höhe von Überschwingern beim Abschalten des Halbleiterschaltelementes V11 eingestellt.

Erfindungsgemäß ist der Verbindungspunkt P1 der RCD-Beschaltung über einen oder mehrere in Reihe geschaltete Widerstände R30 mit der Eingangsklemme 2 zum Anlegen des Primärstromnachbildungssignales verbunden. Der dem Verbindungspunkt P1 gegenüberliegende Anschluß dieses Widerstandes R30 ist zusätzlich über einen Kondensator C4 auf Bezugspotential geschaltet. Der Widerstandswert des Widerstandes R30 sowie der Kapazitätswert des Kondensators C4 ist so zu wählen, daß sich in etwa der gleiche Umkehrpunkt einstellt, wie bei der in Bild 25 der genannten Siemens-Produktionformation vorgestellten Schaltungsanordnung. Der Umkehrpunkt ist der Stromwert in der Sekundärwicklung des Transformators T1, bei dem ein in der Steuereinrichtung IC vorgesehener Pulsweitenmodulator den längsten Ansteuerimpuls zuläßt. Der Widerstand R30 und die Kapazität C4 ist demnach so zu wählen, daß der Transformator T1 gerade nicht bis in die Sättigung magnetisierbar ist.

Es hat sich herausgestellt, daß der Widerstandswert des Widerstandes R30 zwischen 400 kOhm und 800 kOhm, vorzugsweise 680 kOhm, gewählt werden und der Kondensator C4 eine Kapazität in nF-Bereich aufweisen soll.

Im übrigen gleicht das in FIG 1 dargestellte freischwingende Sperrwandler-Schaltnetzteil dem Schaltnetzteil von Bild 25 in der oben erwähnten Siemens-Produktionformation, so daß hier - um Wiederholungen zu vermeiden - nicht mehr im einzelnen darauf eingegangen zu werden braucht. Wesentlich für die Erfindung ist das Bereitstellen des Primärstromnachbildungssignales über den Widerstand R30 und die Kapazität C4.

Anzumerken bleibt an dieser Stelle noch, daß als Steuereinrichtung IC nicht nur der integrierte Schaltkreis TDA 4605 verwendet werden kann, sondern vielmehr jede Steuereinrichtung, die ein Primärstromnachbildungssignal sowie ein die Steuereinrichtung freigebendes Spannungssignal benötigt. So können beispielsweise auch die unter der Bezeichnung TDA 4600, TDA 4601 und TDA 4601 D bekannten Schaltnetzteil-ICs von Siemens bei einem erfindungsgemäßen Schaltnetzteil eingesetzt werden. Bei den zuletztgenannten integrierten Schaltkreisen muß das Primärstromnachbildungssignal an die Klemme 4 und das Spannungssignal an die Klemme 5 des jeweiligen integrierten Schaltkreises angelegt werden.

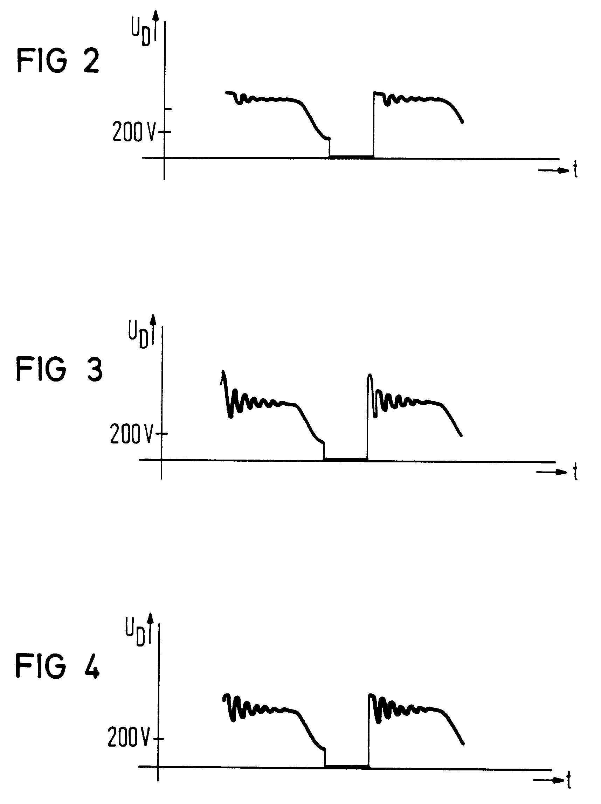

Die Wirkungsweise der Erfindung wird anhand der Figuren 2 bis 4 deutlich, die jeweils die Drainspannung U_{D} bei dem als Halbleiterschaltelement V11 eingesetzten SIPMOS® von FIG 1 zeigen.

FIG 2 stellt den Verlauf der Drainspannung U_{D} dar, wie er sich bei intakter RCD-Beschaltung einstellt. Es ist deutlich zu erkennen, daß der erste Überschwinger beim Abschalten des Halbleiterschaltelementes gekappt und damit begrenzt wird. Durch dieses Begrenzen der Überschwinger und damit der Spitzenspannung wird erreicht, daß das Halbleiterschaltelement V11 nicht unnötig belastet wird, was zwangsläufig eine Erhöhung des Durchlaßwiderstandes R_{DSon} zur Folge hätte.

Fällt jedoch der Widerstand R6 in der RCD-Beschaltung aus, z. B. infolge einer aufgegangenen Lötverbindung, so würde sich ohne die erfindungsgemäße Weiterbildung des Sperrwandler-Schaltnetzteiles ein Verlauf der Drainspannung U_{D} ergeben, wie dieser in FIG 3 dargestellt ist. Es ist deutlich zu erkennen, daß die Spitzenspannung des ersten Überschwingers weit über der Spitzenspannung von FIG 1 liegt. Diese hohe Spitzenspannung könnte zum Zerstören des Halbleiterschaltelementes und damit zum Ausfall des gesamten Schaltnetzteiles führen.

Beim erfindungsgemäßen freischwingenden Sperrwandler-Schaltnetzteil sieht der Verlauf der Drainspannung U_{D} so aus, wie er in FIG 4 über der Zeit t aufgetragen ist. Auch hier ist eine Begrenzung des ersten Überschwingers zu erkennen. Dieses Begrenzen der Spitzenspannung ist zwar nicht so wirkungsvoll wie die der RCD-Beschaltung, genügt aber trotzdem, um das Halbleiterschaltelement V11 wirksam zu schützen. Zusätzlich wird mit der erfindungsgemäßen Weiterbildung erreicht, daß in Abhängigkeit von sekundärseitiger Belastung des Sperrwandlerschaltnetzteiles die Impulse zum Ansteuern des Halbleiterschaltelementes kürzer werden. Bei Vollastbetrieb nimmt mit der oben angegebenen Dimensionierung des Widerstandes R30 und des Kondensators C4 die Impulsbreite um etwa 10 % ab. FIG 4 zeigt Normallastbetrieb, weswegen die Abnahme der Impulsbreite nicht sehr deutlich zu erkennen ist.

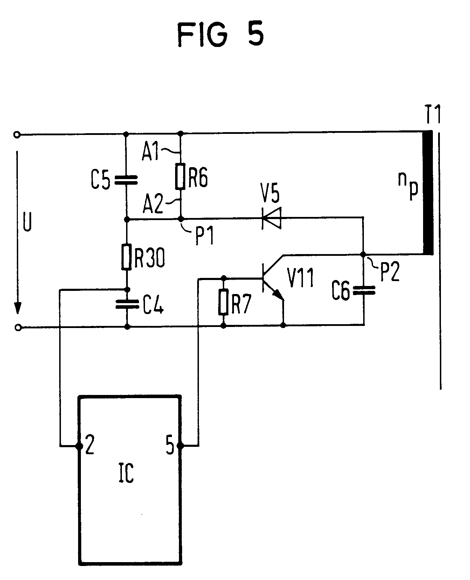

FIG 5 zeigt ausschnittsweise ein zweites Ausführungsbeispiel der Erfindung. Als Unterschied zum Sperrwandlerschaltnetzteil von FIG 1 wird jetzt ein Bipolartransistor verwendet, der durch eine RCD-Beschaltung vor Überschwingern geschützt wird. Die RCD-Beschaltung besteht wieder aus der Diode V5, dem Widerstand R6 und dem Kondensator C5. Der Kondensator C5 ist jetzt jedoch parallel zum Widerstand R6 geschaltet und liegt damit mit seinem einen Anschluß am Verbindungspunkt P1 und mit seinem anderen Anschluß am positiven Pol der gleichgerichteten Spannung U. Im übrigen entspricht die Schaltung von FIG 5 der von FIG 1. Auch hier ist vorgesheen, daß die Eingangsklemme der Steuereinrichtung über einen Widerstand mit dem zwischen dem Widerstand und dem Kondensator liegenden ersten Verbindungspunkt verbunden ist und daß der Widerstand mit seinem dem ersten Verbindungspunkt gegenüberliegendem Anschluß über einen weiteren Kondensator auf Bezugspotential geschaltet ist.

## Patentansprüche

1. Sperrwandler-Schaltnetzteil mit einem steuerbaren Halbleiterschaltelement (V11) zum getakteten Anlegen einer gleichgerichteten Spannung (U) an eine erste Primärwicklung (nₚ) eines Transformators (T1) und mit einer Steuereinrichtung (IC) zum Ansteuern dieses Halbleiterschaltelementes (V11) nach Maßgabe mindestens eines an eine Eingangsklemme (2) der Steuereinrichtung anzulegenden Primärstromnachbildungssignales und mit einer Schaltungsanordnung zum Begrenzen der Spitzenspannung von Überschwingern beim Abschalten des Halbleiterschaltelementes (V11), die einen mit einem ersten Anschluß (A1) am positiven Pol der gleichgerichteten Spannung (U) liegenden Widerstand (R6) aufweist, der mit seinem anderen Anschluß (A2) mit einem auf einem vorgegebenem Potential liegenden Kondensator (C5) verbunden ist, wobei ein zwischen dem Widerstand (R6) und der Kapazität (C5) liegender erster Verbindungspunkt (P1) über einen Einweggleichrichter (V5) an einen zwischen dem Halbleiterschaltelement (V11) und der Primärwicklung (nₚ) liegenden zweiten Verbindungspunkt (P2) angeschlossen ist,
**dadurch gekennzeichnet,**
daß die Eingangsklemme (2) der Steuereinrichtung (IC) über einen Widerstand (R30) mit dem zwischen dem Widerstand (R6) und dem Kondensator (C5) liegenden ersten Verbindungspunkt (P1) verbunden ist und daß der Widerstand (R30) mit seinem dem ersten Verbindungspunkt (P1) gegenüberliegendem Anschluß über einen weiteren Kondensator (C4) auf Bezugspotential geschaltet ist.

2. Sperrwandler-Schaltnetzteil nach Anspruch 1,
**dadurch gekennzeichnet,**
daß der Kondensator (C5) auf Bezugspotential geschaltet ist.

3. Sperrwandler-Schaltnetzteil nach Anspruch 1,
**dadurch gekennzeichnet,**
daß der Kondensator (C5) mit dem positiven Pol der gleichgerichteten Spannung (V) verbunden ist.

4. Sperrwandler-Schaltnetzteil nach einem der Ansprüche 1 bis 3,
**dadurch gekennzeichnet,**
daß der Widerstand (R30) und der weitere Kondensator (C4) so gewählt sind, daß der Transformator (T1) gerade nicht bis in die Sättigung magnetisierbar ist.

5. Sperrwandler-Schaltnetzteil nach einem der Ansprüche 1 bis 4,
**dadurch gekennzeichnet,**
daß der Widerstand (R30) zwischen 400 kOhm und 800 kOhm aufweist.

6. Sperrwandler-Schaltnetzteil nach einem der Ansprüche 1 bis 5,
**dadurch gekennzeichnet**,
daß der weitere Kondensator (C4) eine Kapazität im nF-Bereich aufweist.

## Claims

1. Flyback converter switched-mode power supply having a controllable semiconductor switching element (V11) for the pulsed application of a rectified voltage (U) to a first primary winding (nₚ) of a transformer (T₁), and having a control device (IC) for driving this semiconductor switching element (V11) in accordance with at least one primary-current modelling signal, which is to be applied to an input terminal (2) of the control device, and having a circuit arrangement for limiting the peak voltage of overshoots while the semiconductor switching element (V11) is switching off, which circuit arrangement has a resistor (R6) whose first connection (Al) is connected to the positive pole of the rectified voltage (U) and whose other connection (A2) is connected to a capacitor (C5) which is at a predetermined potential, a first connection point (P1) which is located between the resistor (R6) and the capacitor (C5) being connected via a half-wave rectifier (V5) to a second connection point (P2) which is located between the semiconductor switching element (V11) and the primary winding (nₚ), characterized in that the input terminal (2) of the control device (IC) is connected via a resistor (R30) to the first connection point (P1) which is located between the resistor (R6) and the capacitor (C5), and in that the resistor (R30) is connected by means of its connection which is opposite the first connection point (P1) to reference potential, via a further capacitor (C4).

2. Flyback converter switched-mode power supply according to Claim 1, characterized in that the capacitor (C5) is connected to reference potential.

3. Flyback converter switched-mode power supply according to Claim 1, characterized in that the capacitor (C5) is connected to the positive pole of the rectified voltage (V).

4. Flyback converter switched-mode power supply according to one of Claims 1 to 3, characterized in that the resistor (R30) and the further capacitor (C4) are selected such that the transformer (T1) can be magnetized such that it is just not saturated.

5. Flyback converter switched-mode power supply according to one of Claims 1 to 4, characterized in that the resistor (R30) is between 400 kOhm and 800 kOhm.

6. Flyback converter switched-mode power supply according to one of Claims 1 to 5, characterized in that the further capacitor (C4) has a capacitance in the nF range.

## Revendications

1. Bloc d'alimentation à découpage à oscillateur bloqué comportant un élément commandable à semiconducteurs (V11) pour l'application cadencée d'une tension redressée (U) à un premier enroulement primaire (nₚ) d'un transformateur (T1), et un dispositif de commande (IC) pour commander cet élément de commutation à semiconducteurs (V11), en fonction d'au moins un signal de simulation de courant primaire, qui doit être appliqué à une borne d'entrée (2) du dispositif de commande, et à un montage pour limiter la tension maximale de suroscillation lors du blocage de l'élément de commutation à semiconducteurs (V11) et qui possède une résistance (R6), qui est raccordée par une première borne (1) au pôle positif de la tension redressée (U) et est raccordée, par son autre borne (A2), à un condensateur (C2) placé à un potentiel prédéterminé, un premier point de jonction (P1) situé entre la résistance (R6) et la capacité (C5) étant connecté, par l'intermédiaire d'un redresseur simple alternance (V5), à un second point de jonction (P2), qui est situé entre l'élément de commutation à semiconducteurs (V11) et l'enroulement primaire (nₚ),
caractérisée par le fait
que la borne d'entrée (2) du dispositif de commande (IC) est connectée, par l'intermédiaire d'une résistance (R30), au premier point de jonction (P1) situé entre la résistance (R6) et le condensateur (C5), et que la résistance (R30) est raccordée au potentiel de référence par sa borne, qui est située à l'opposé du premier point de jonction (P1), par l'intermédiaire d'un autre condensateur (C4).

2. Bloc d'alimentation à découpage à oscillateur bloqué suivant la revendication 1, caractérisée par le fait que le condensateur (C5) est placé au potentiel de référence.

3. Bloc d'alimentation à découpage à oscillateur bloqué suivant la revendication 1, caractérisée par le fait que le condensateur (C5) est raccordé au pôle positif de la tension redressée (V).

4. Bloc d'alimentation à découpage à oscillateur bloqué suivant l'une des revendications 1 à 3, caractérisée par le fait que la résistance (R30) et l'autre condensateur (C4) sont choisis de telle sorte que le transformateur (T1) ne peut précisément pas être aimanté jusqu'à la saturation.

5. Bloc de réseau d'alimentation à découpage à oscillateur bloqué suivant l'une des revendications 1 à 4, caractérisée par le fait que la résistance (R30) est comprise entre 400 k.ohms et 800 k.ohms.

6. Bloc d'alimentation à découpage à oscillateur bloqué suivant l'une des revendications 1 à 5, caractérisé par le fait que l'autre condensateur (C4) possède une capacité située dans la gamme des nF.
